# EUROPÄISCHE PATENTSCHRIFT

(11) **EP 2 523 590 B1**
(45) Veröffentlichungstag und Bekanntmachung des Hinweises auf die Patenterteilung: **13.11.2013**
(21) Anmeldenummer: 11700328.5
(22) Anmeldetag: 05.01.2011
(51) Int. Cl.: A47L 5/36, A47L 7/00, A47L 9/12, F16K 24/04, B01D 46/24, B01D 46/52

(54) **STAUBSAUGERFILTER**
VACUUM CLEANER FILTER
FILTRE D'ASPIRATEUR

(30) Priorität: 12.01.2010 DE 102010004714
(43) Veröffentlichungstag der Anmeldung: 21.11.2012
(60) Teilanmeldung: 13157697.7
(73) Patentinhaber: Alfred Kärcher GmbH & Co. KG, 71364 Winnenden (DE)
(72) Erfinder: KNEE, Roger, 73614 Schorndorf (DE); ERBEL, Günther, 74523 Schwäbisch Hall (DE); ZERRER, Thomas, 73663 Berglen (DE); VENTURINI, Eugenio, 46033 Casteldario (MN) (IT)
(74) Vertreter: Hoeger, Stellrecht & Partner Patentanwälte
(86) Internationale Anmeldenummer: PCT/EP2011/050087
(87) Internationale Veröffentlichungsnummer: WO 2011/086016

(56) Entgegenhaltungen:
- WO-A1-98/07361
- DE-A1- 19 807 664
- DE-A1-102005 054 273
- US-A- 4 629 482

## Beschreibung

Die Erfindung betrifft ein Nass-/Trocken-Sauger-Filter mit den Merkmalen des Oberbegriffes von Patentanspruch 1.

Staubsauger umfassen üblicherweise einen Schmutzsammelbehälter mit einem Saugeinlass, an den eine Saugleitung, beispielsweise ein Saugschlauch, angeschlossen werden kann. Mittels eines Saugaggregates wird der Schmutzsammelbehälter mit Unterdruck beaufschlagt, so dass sich eine Saugströmung ausbildet und dadurch Sauggut, beispielsweise Schmutz- und Staubteilchen, in den Schmutzsammelbehälter eingesaugt werden kann. Im Strömungsweg zwischen dem Schmutzsammelbehälter und dem Saugaggregat befindet sich eine Filterhalterung, an der ein Staubsaugerfilter lösbar fixierbar ist. Die Saugluft durchströmt das Staubsaugerfilter, wobei mitgeführtes Sauggut am Filter abgeschieden wird.

Es sind Staubsauger bekannt, mit deren Hilfe nicht nur trockenes Sauggut aufgesaugt werden kann, sondern auch feuchtes Sauggut und sogar Flüssigkeiten. Derartige Staubsauger werden üblicherweise als Nass-/Trocken-Sauger bezeichnet. Kommt für den Filterkörper des Staubsaugerfilters ein wasseranziehendes Filtermedium zum Einsatz, das von Flüssigkeit benetzt wird, so erhöht sich in vielen Fällen der Strömungswiderstand des Filterkörpers, d. h. er wird zunehmend luftundurchlässiger. Dies kann zur Folge haben, dass sich stromabwärts des Filterkörpers bei fortlaufendem Betrieb des Saugaggregates ein beträchtlicher Unterdruck ausbildet, unter dessen Wirkung den Filterkörper durchdringende Flüssigkeit in das Saugaggregat eingesaugt wird. Diese Schwierigkeit besteht insbesondere dann, wenn das Filterelement in Form einer Filterpatrone ausgestaltet ist, mit einem hohlzylindrischen Filterkörper. Im feuchten Zustand des Filterkörpers kann sich im zylindrischen Innenraum des Filterkörpers ein derartiger Unterdruck ausbilden, dass der Flüssigkeitsspiegel im Filterkörper so weit angehoben wird, dass die Flüssigkeit in das Saugaggregat eindringen kann. Dies kann zu Störungen des Staubsaugers führen und sollte deshalb verhindert werden.

Um ein Eindringen von Flüssigkeit in das Saugaggregat zu vermeiden, weisen die meisten Nass-/Trocken-Sauger am Eingang des Saugaggregates ein Sicherheitsventil auf, das bei Erreichen eines bestimmten Flüssigkeitsspiegels im Schmutzsammelbehälter den Eingang des Saugaggregates verschließt. Häufig ist ein derartiges Sicherheitsventil in Form eines Schwimmerventils ausgebildet, wie es beispielsweise in der DE 198 07 664 C2 beschrieben ist.

Häufig wird die Saugluft auch zur Kühlung des Saugaggregates herangezogen. Deshalb weisen die bekannten Sicherheitsventile in vielen Fällen einen kleinen Kühlluftkanal auf, der auch bei erhöhtem Flüssigkeitsspiegel im Schmutzsammelbehälter offen bleibt, um sicherzustellen, dass auch bei geschlossenem Sicherheitsventil das Saugaggregat von Saugluft gekühlt werden kann. Damit erhöht sich aber die Gefahr, dass bei Ausbildung eines hohen Unterdruckes, wie er sich bei einem mit Flüssigkeit benetzten Filterkörper mit wasseranziehendem Filtermedium ausbilden kann, Flüssigkeit in das Saugaggregat eindringt.

Um das Eindringen von Flüssigkeit in das Saugaggregat zu verhindern, wird in der EP 0 921 748 B1 ein Filterkörper mit einem wasserabweisenden Filtermedium vorgeschlagen. Dadurch bleibt der Filterkörper auch dann luftdurchlässig, wenn er mit Flüssigkeit in Kontakt kommt. Saugluft kann also weiterhin durch den Filterkörper hindurchströmen, so dass Sauggut abgeschieden werden kann. Für die Flüssigkeit bildet das wasserabweisende Filtermedium allerdings eine Sperre aus. Hydrophobe, also wasserabweisende Filtermedien können häufig nicht vollständig vermeiden, dass Flüssigkeit durch den Filterkörper hindurchtritt. Deshalb ist auch bei Verwendung eines wasserabweisenden Filtermediums der Einsatz eines Sicherheitsventils ratsam, um das Eindringen von Flüssigkeit in das Saugaggregat zuverlässig zu verhindern.

Wie bereits erwähnt, haben sich bei Nass-/Trocken-Saugern Sicherheitsventile in Form von Schwimmerventilen als vorteilhaft erwiesen. Diese weisen einen Schwimmerkörper auf, der in einer Schließstellung den Eingang des Saugaggregates mit Ausnahme eines frei bleibenden Kühlluftkanals verschließt. Das Einnehmen der Schließstellung erfolgt in Abhängigkeit vom Pegel der den Schwimmerkörper umgebenden Flüssigkeit. Da die Schwimmerventile bezogen auf die Saugströmung üblicherweise stromabwärts des jeweiligen Staubsaugerfilters angeordnet sind, können die Schwimmerventile nur dann zum Einsatz kommen, wenn der Filterkörper des Staubsaugerfilters eine gewisse Wasserdurchlässigkeit aufweist.

Filterkörper von Staubsaugerfiltern, die für den Einsatz in Nass-/Trocken-Saugern vorgesehen sind, sollten daher eine gute Wasserdurchlässigkeit aufweisen, damit bei Einsatz eines Schwimmerventils der Schwimmerkörper bei Erreichen eines maximalen Flüssigkeitsspiegels zuverlässig seine Schließstellung einnehmen kann, und sie sollten auch eine hohe Luftdurchlässigkeit aufweisen, um den Strömungswiderstand des Staubsaugerfilters sowohl im nassen als auch im trockenen Zustand möglichst gering zu halten. Darüber hinaus sollten sie einen hohen Abscheidegrad für Sauggut aufweisen.

Aus dem Dokument DE 10 2005 054 273 A1 ist ein Filterelement bekannt, das unter anderem bei Staubsaugern verwendet werden kann. Das Filterelement weist ein Filtermaterial auf, wobei ein Teilbereich des Filtermaterials hydrophob und ein anderer Teilbereich des Filtermaterials hydrophil ausgestaltet sein kann. Die Ausdehnung der hydrophoben und hydrophilen Bereiche kann so gewählt werden, dass einerseits Schmutzteilchen gefiltert werden können, an welchen Wasser angelagert ist und andererseits verhindert wird, dass solche Schmutzteilchen die Poren des Filterelements dauerhaft verschließen.

Aufgabe der vorliegenden Erfindung ist es, einen Staubsaugerfilter der eingangs genannten Art derart weiterzubilden, dass der Filterkörper im nassen und im trockenen Zustand einen hohen Abscheidegrad für Sauggut aufweist, und sowohl für Wasser als auch für Luft gut durchlässig ist.

Diese Aufgabe wird durch ein Nass-/Trocken-Sauger-Filter mit den Merkmalen von Patentanspruch 1 gelöst.

Das erfindungsgemäße Filterelement ist in Form einer Filterpatrone ausgestaltet, mit einem zylindermantelförmigen Filterkörper, der zwischen einer oberen und einer unteren Endscheibe angeordnet ist. Derartige Filterpatronen können auch von Laien auf einfache Weise ausgetauscht werden, und weisen eine beachtliche mechanische Stabilität auf. Sie zeichnen sich daher durch eine gute Handhabbarkeit aus.

Die hydrophoben und hydrophilen Filterabschnitte sind in Umfangsrichtung der Filterpatrone einander abwechselnd angeordnet, und erstrecken sich in axialer Richtung zumindest über einen Teilbereich der Filterpatrone. Insbesondere kann vorgesehen sein, dass sich die Filterabschnitte von der oberen bis zur unteren Endscheibe erstrecken.

Der Filterkörper umfasst mindestens zwei verschiedene Filterabschnitte, nämlich zumindest einen hydrophoben, also wasserabweisenden, Filterabschnitt und zumindest einen hydrophilen, also wasseranziehenden, Filterabschnitt. Sämtliche Filterabschnitte sind luftdurchlässig, so dass Saugluft hindurchströmen kann.

Die verschiedenen Filterabschnitte sind bezogen auf die Strömungsrichtung der Saugluft parallel zueinander angeordnet. Ein Teil der angesaugten Saugluft kann also einen hydrophilen Filterabschnitt durchströmen, und ein anderer Teil der Saugluft kann einen hydrophoben Filterabschnitt durchströmen.

Der mindestens eine hydrophobe Filterabschnitt stellt sicher, dass Saugluft auch dann durch den Filterkörper hindurchströmen kann, wenn der Filterkörper mit Flüssigkeit benetzt ist. Der Strömungswiderstand des mindestens einen hydrophoben Filterabschnitts ändert sich nämlich allenfalls unwesentlich, wenn der Filterabschnitt mit Flüssigkeit in Kontakt gelangt. Das erfindungsgemäße Nass-/Trocken-Sauger-Filter weist somit auch im nassen Zustand eine hohe Luftdurchlässigkeit auf.

Der mindestens eine hydrophile Filterabschnitt stellt sicher, dass auch Flüssigkeit durch das Nass/Trocken-Sauger-Filter hindurch gelangen kann. Somit kann das erfindungsgemäße Nass-Trocken-Sauger-Filter besonders vorteilhaft in Kombination mit einem bezogen auf die Saugströmung stromabwärts des Nass-/Trocken-Sauger-Filters angeordneten Schwimmerventil zum Einsatz kommen, denn die Wasserdurchlässigkeit des mindestens einen hydrophilen Filterabschnitts gewährleistet eine einwandfreie Schließfunktion des Schwimmerventils.

Sowohl der mindestens eine hydrophobe Filterabschnitt als auch der mindestens eine hydrophile Filterabschnitt weisen jeweils einen beachtlichen Abscheidegrad für Sauggut auf.

Der mindestens eine hydrophobe Filterabschnitt kann einen sehr hohen Abscheidegrad für Sauggut aufweisen, da er für Wasser nicht durchlässig zu sein braucht. Die Wasserdurchlässigkeit wird durch den mindestens einen hydrophilen Filterabschnitt gewährleistet.

Insbesondere kann vorgesehen sein, dass der mindestens eine hydrophobe Filterabschnitt einen höheren Abscheidegrad für Sauggut aufweist als der mindestens eine hydrophile Filterabschnitt.

Der mindestens eine hydrophile Filterabschnitt kann beispielsweise ein imprägniertes Filterpapier aufweisen. Um die hydrophile Eigenschaft sicherzustellen, kann zur Imprägnierung beispielsweise ein Phenolharz verwendet werden.

Der mindestens eine hydrophobe Filterabschnitt kann ein Filterpapier umfassen, das mit einer hydrophoben Substanz imprägniert ist. Es kann allerdings auch vorgesehen sein, dass der mindestens eine hydrophobe Filterabschnitt eine Kunststoffmembran umfasst. Derartige Kunststoffmembranen sind dem Fachmann an sich bekannt, sie werden beispielsweise in der EP 0 921 748 B1 beschrieben.

Die hydrophilen und hydrophoben Filterabschnitte können jeweils als selbstständig handhabbare Filterteile ausgestaltet sein. Beispielsweise kann vorgesehen sein, dass der Nass/Trocken-Sauger-Filter ein Kombinationsfilter ausbildet mit einem hydrophilen Filterteil und einem hydrophoben Filterteil, die zusammengesteckt werden können oder gemeinsam an einer Filterhalterung des Nass/Trocken-Saugers festgelegt werden können.

Es kann allerdings auch vorgesehen sein, dass die hydrophilen und hydrophoben Filterabschnitte unlösbar miteinander verbunden sind.

Von besonderem Vorteil ist es, wenn der Filterkörper ein Filtermaterial umfasst, das hydrophile und hydrophobe Flächenbereiche aufweist. Die hydrophilen und hydrophoben Filterabschnitte werden von den jeweiligen Flächenbereichen des Filtermaterials gebildet und sind somit einstückig miteinander verbunden.

Es kann vorgesehen sein, dass das Filtermaterial, beispielsweise ein Filterpapier, bereichsweise mit unterschiedlichen Substanzen imprägniert ist. Durch die Imprägnierung mit den unterschiedlichen Substanzen können der mindestens eine hydrophile Filterabschnitt und der mindestens eine hydrophobe Filterabschnitt kostengünstig erzeugt werden.

Günstig ist es, wenn sich der mindestens eine hydrophobe Filterabschnitt über maximal die Hälfte der gesamten Filterfläche des Filterkörpers erstreckt.

Als besonders vorteilhaft hat es sich erwiesen, wenn die Filterfläche des mindestens einen hydrophoben Filterabschnitts gleich groß wie oder kleiner ist als die Filterfläche des mindestens einen hydrophilen Filterabschnitts. Der Flächenanteil des hydrophilen Filterabschnitts an der gesamten Filterfläche des Nass-/Trocken-Sauger-Filters Filters ist bei einer derartigen Ausgestaltung mindestens so groß wie der Flächenanteil des hydrophoben Filterabschnitts. Es hat sich gezeigt, dass gerade bei Verwendung des erfindungsgemäßen Nass-/Trocken-Sauger-Filters in Kombination mit einem Schwimmerventil das Eindringen von Flüssigkeit in das Saugaggregat besonders zuverlässig verhindert werden kann, wenn die Filterfläche des mindestens einen hydrophilen Filterabschnitts zumindest so groß ist wie die von dem mindestens einen hydrophoben Filterabschnitt bereit gestellte Filterfläche.

Günstigerweise grenzt ein hydrophober Filterabschnitt unmittelbar an einen hydrophilen Filterabschnitt. So kann beispielsweise vorgesehen sein, dass jeweils ein hydrophober Filterabschnitt mit einem hydrophilen Filterabschnitt verklebt ist.

Von besonderem Vorteil bei der Ausgestaltung des Filterelementes in Form einer Filterpatrone ist es, wenn jeweils zwei hydrophile Filterabschnitte und jeweils zwei hydrophobe Filterabschnitte einander diametral gegenüberliegend angeordnet sind. Eine derartige Ausgestaltung ist vor allem dann günstig, wenn die an der Filterhalterung des Nass-/Trocken-Saugers fixierte Filterpatrone ein Schwimmerventil umgibt, da dann der Schwimmerkörper auch im nassen Zustand der Filterpatrone an mindestens zwei einander diametral gegenüberliegenden Seiten von Saugluft angeströmt werden kann. Dadurch wird die Gefahr verringert, dass der Schwimmerkörper beim Übergang von seiner Offenstellung in seine Schließstellung verkantet, oder von unsymmetrisch auf ihn einwirkender Saugluft unbeabsichtigt in seine Schließstellung bewegt wird. Im trockenen Zustand der Filterpatrone werden während des Betriebes des Nass-/Trocken-Saugers sowohl die hydrophoben als auch die hydrophilen Filterabschnitte von Saugluft durchströmt, so dass der von der Filterpatrone umgebene Schwimmerkörper über seinen gesamten Umfang symmetrisch von Saugluft angeströmt wird. Die Gefahr, dass der Schwimmerkörper beim Übergang von seiner Offenstellung in seine Schließstellung verkantet oder unbeabsichtigt seine Schließstellung einnimmt, stellt sich praktisch nicht. Kommt die Filterpatrone mit Flüssigkeit in Kontakt, so verringert sich die Luftdurchlässigkeit der hydrophilen Filterabschnitte, wohingegen die hydrophoben Filterabschnitte weiterhin eine sehr hohe Luftdurchlässigkeit aufweisen. Da mindestens zwei hydrophobe Filterabschnitte einander diametral gegenüberliegen, wird der von der Filterpatrone umgebene Schwimmerkörper somit auch bei nasser Filterpatrone auf einander gegenüberliegenden Seiten von Saugluft angeströmt, so dass keine Gefahr besteht, dass der Schwimmerkörper beim Übergang von seiner Offenstellung in seine Schließstellung verkantet oder unbeabsichtigt seine Schließstellung einnimmt.

Günstigerweise erstrecken sich die hydrophoben Filterabschnitte in Umfangsrichtung der Filterpatrone jeweils über einen gleich großen wie oder kleineren Winkelbereich als die hydrophilen Filterabschnitte. Der Anteil der hydrophoben Filterabschnitte an der gesamten Filterfläche der Filterpatrone ist somit gleich groß wie oder aber etwas geringer als der Anteil, den die hydrophilen Filterabschnitte an der gesamten Filterfläche der Filterpatrone aufweisen.

Es kann beispielsweise vorgesehen sein, dass sich zwei einander diametral gegenüberliegende hydrophobe Filterabschnitte in Umfangsrichtung der Filterpatrone über identische Winkelbereiche von jeweils maximal 90° erstrecken. In Umfangsrichtung zwischen den hydrophoben Filterabschnitten kann jeweils ein hydrophiler Filterabschnitt angeordnet sein, der sich günstigerweise in Umfangsrichtung der Filterpatrone über einen Winkelbereich von mindestens 90° erstreckt.

Die hydrophoben und hydrophilen Filterabschnitte können in Umfangsrichtung der Filterpatronen unmittelbar aneinander angrenzen.

Wie bereits erläutert, können die Filterabschnitte selbstständig handhabbare Filterteile ausbilden. Bei einer derartigen Ausführungsform umfasst die Filterpatrone zumindest ein hydrophobes Patronenteil und mindestens ein hydrophiles Patronenteil, die in axialer Richtung zusammengefügt werden können.

Bevorzugt bilden die hydrophoben und hydrophilen Filterabschnitte in ihrer Gesamtheit ein sternförmig gefaltetes Filtermaterial, das einen hohlzylindrischen Filterkörper der Filterpatrone ausbildet.

Günstigerweise bilden die hydrophoben und/oder hydrophilen Filterabschnitte ein Oberflächenfilter aus. Oberflächenfilter zeichnen sich dadurch aus, dass das Sauggut an der Oberfläche der Filterabschnitte abgeschieden wird. Diese können daher auf einfache Weise gereinigt werden.

Von besonderem Vorteil ist es, wenn die hydrophoben und/oder hydrophilen Filterabschnitte eine Beschichtung mit Nanofasern aufweisen. Die Nanofaserschicht bildet eine feinporige Oberfläche, die das Sauggut zuverlässig an der Oberfläche der Filterabschnitte zurückhält. Die Nanofasern weisen bevorzugt einen Durchmesser von weniger als 1 Mikrometer, insbesondere maximal 0,5 Mikrometer auf.

Die Erfindung betrifft auch die Verwendung des voranstehend erläuterten Nass-/Trocken-Sauger-Filters in Kombination mit einem Schwimmerventil bei einem Nass-/Trocken-Sauger, wobei das Schwimmerventil bezogen auf die vom Saugaggregat des Nass-/Trocken-Saugers erzeugte Saugströmung stromabwärts des Nass-/Trocken-Sauger-Filters angeordnet wird.

Wie bereits erläutert ist die Verwendung des Nass-/Trocken-Sauger-Filters in Kombination mit dem Schwimmerventil von besonderem Vorteil, wenn das Schwimmerventil einen unverschließbaren Kühlluftkanal aufweist.

Die nachfolgende Beschreibung bevorzugter Ausführungsformen der Erfindung dient im Zusammenhang mit der Zeichnung der näheren Erläuterung. Es zeigen:
- Figur 1:: eine Schnittansicht eines Nass-/Trocken-Saugers mit einem Schwimmerventil, das von einem erfindungsgemäßen Nass-/Trocken-Sauger-Filter umgeben ist;
- Figur 2:: eine vergrößerte Schnittansicht des vom Nass-/Trocken-Sauger-Filter umgebenen Schwimmerventils aus Figur 1;
- Figur 3:: eine perspektivische Darstellung des erfindungsgemäßen Nass-/Trocken-Sauger-Filters und
- Figur 4:: eine Schnittansicht des Nass-/Trocken-Sauger-Filters aus Figur 3 quer zu dessen Längsachse.

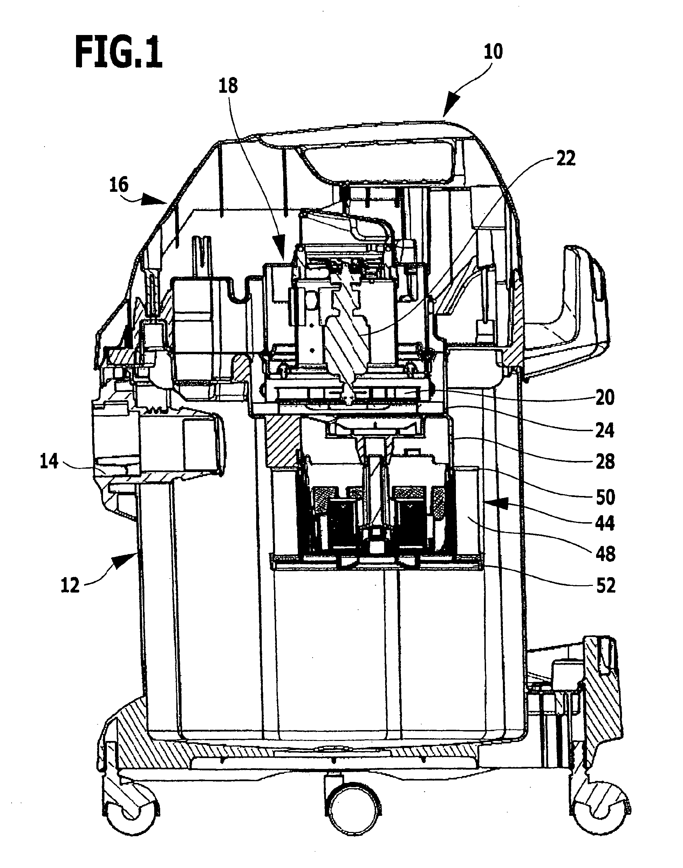

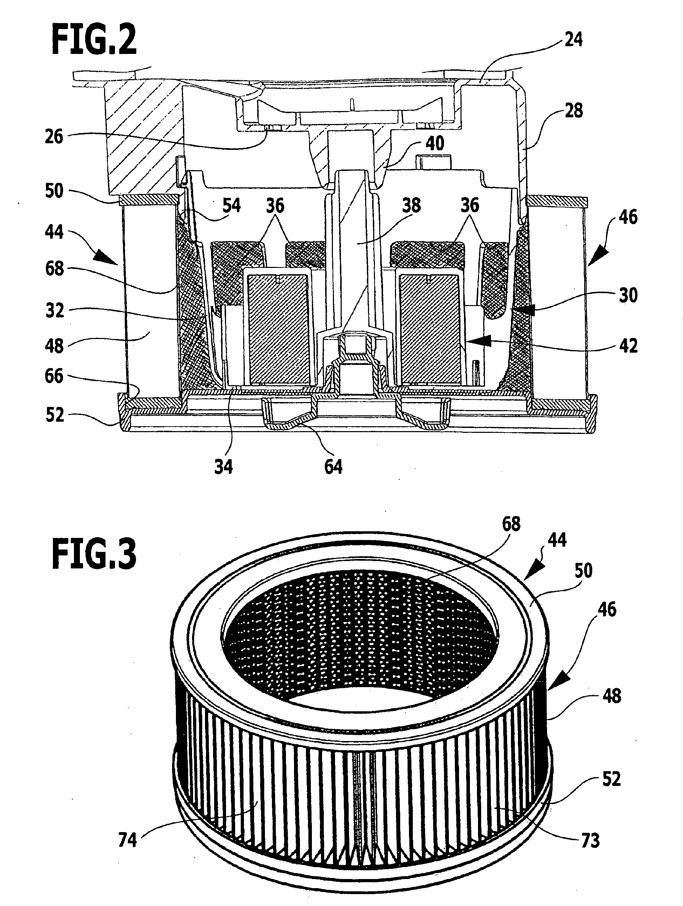

In den Figuren 1 und 2 ist schematisch ein insgesamt mit dem Bezugszeichen 10 belegter Staubsauger in Form eines Nass-/Trocken-Saugers dargestellt, mit dem sowohl trockenes als auch feuchtes Sauggut und auch Flüssigkeit angesaugt werden können. Er umfasst einen Schmutzsammelbehälter 12 mit einem Saugeinlass 14, an den eine in der Zeichnung nicht dargestellte, an sich bekannte Saugleitung angeschlossen werden kann, die an ihrem freien Ende beispielsweise eine Saugdüse trägt zum Absaugen einer Fläche, beispielsweise einer Bodenfläche. Die Saugleitung kann zum Beispiel in Form eines Saugschlauches ausgestaltet sein.

Auf den Schmutzsammelbehälter 12 ist ein Oberteil 16 des Staubsaugers 10 aufgesetzt, das ein Saugaggregat 18 umgibt. Das Saugaggregat 18 umfasst in üblicher Weise ein Sauggebläse 20, das von einem Elektromotor 22 angetrieben wird.

Das Oberteil 16 bildet eine den Schmutzsammelbehälter 12 abdeckende Zwischenwand 24 aus, die auf ihrer Oberseite des Saugaggregat 18 trägt. Das Saugaggregat 18 steht über eine ringförmige Einlassöffnung 26 der Zwischenwand 24 mit dem Innenraum des Schmutzsammelbehälters 12 in Strömungsverbindung.

Die Einlassöffnung 26 ist von einem Ringkragen 28 umgeben, der von der Zwischenwand 24 nach unten absteht und in den Schmutzsammelbehälter 12 eintaucht. Innenseitig ist am Ringkragen 28 ein topfförmiges Gehäuse 30 gehalten, mit einer Seitenwand 32, die vom Ringkragen 28 nach unten absteht, und mit einer Bodenwand 34. Die Seitenwand 32 weist eine Vielzahl von Durchtrittsöffnungen 36 auf. Innenseitig schließt sich gehäusemittig an die Bodenwand 34 einstückig ein Führungsprofil 38 an, das sich nach oben in Richtung Saugturbine 20 bis zu einer an die Zwischenwand 24 angeformten Führungshülse 40 erstreckt, die von der ringförmigen Einlassöffnung 26 umgeben ist.

Das Gehäuse 30 nimmt einen hohlzylinderförmigen Schwimmerkörper 42 auf, der in seiner in Figur 2 dargestellten Offenstellung im Abstand zur Einlassöffnung 26 angeordnet ist und auf der Bodenwand 34 des Gehäuses 30 aufsitzt. Dringt Flüssigkeit über die Durchtrittsöffnungen 36 in das Innere des Gehäuses 30 ein, so erfährt der Schwimmerkörper 42 einen Auftrieb, so dass er sich entlang des Führungsprofils 38 in Richtung Einlassöffnung 26 bewegt. Wird ein maximal zulässiger Flüssigkeitsspiegel erreicht, so legt sich der Schwimmerkörper 42 in einer in der Zeichnung nicht dargestellten Schließstellung dichtend an die ringförmige Einlassöffnung 26 an. In der Schließstellung verschließt somit der Schwimmerkörper 42 die Einlassöffnung 26 mit Ausnahme eines in der Zeichnung nicht dargestellten Kühlluftkanals, über den auch dann Saugluft in das Saugaggregat 18 zu dessen Kühlung eingesaugt werden kann, wenn der Schwimmerkörper 42 seine Schließstellung einnimmt.

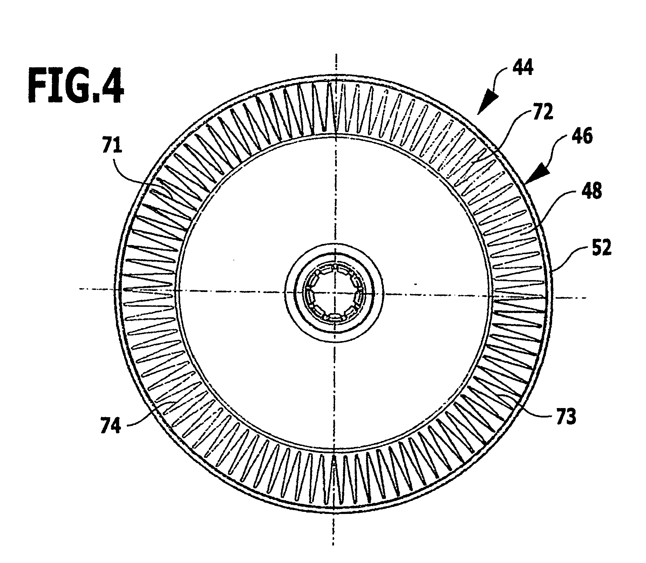

Auf die Außenseite des topfförmigen Gehäuses 30 ist ein erfindungsgemäßes Nass-/Trocken-Sauger-Filter 44 aufgeschoben. Dieses bildet ein auswechselbares Filterelement aus in Form einer Filterpatrone 46. Dies wird insbesondere aus den Figuren 3 und 4 deutlich.

Die Filterpatrone 46 umfasst einen zylindermantelförmigen Filterkörper 48, der zwischen einer ringförmigen oberen Endscheibe 50 und einer tellerförmigen unteren Endscheibe 52 angeordnet ist. Die Filterpatrone 46 ist auf den freien Rand 54 des Ringkragens 28 aufgesteckt. Zur Festlegung der Filterpatrone 46 am topfförmigen Gehäuse 30 kommt ein die untere Endscheibe 52 durchgreifendes Befestigungselement 64 zum Einsatz, das beispielsweise nach Art einer Schraube ausgestaltet sein kann und die Filterpatrone insbesondere über eine Bajonett-Verbindung am Führungsprofil 38 festlegt. Die untere Endscheibe 52 weist auf ihrer dem Saugaggregat 18 zugewandten Oberseite eine ringförmige Vertiefung 66 auf, in die ein sternförmig gefaltetes Filtermaterial stirnseitig eintaucht.

Die Filterpatrone 46 umgibt das topfförmige Gehäuse 30 abgedichtet, d. h. ein vom Saugaggregat 18 erzeugter Saugstrom kann nur über die aktive Filterfläche des Filterkörpers 48 in den von der Filterpatrone 46 umgebenen Bereich, und damit über die Durchtrittsöffnungen 36 in das Innere des topfförmigen Gehäuses 30, und von diesem über die ringförmige Einlassöffnung 26 zum Saugaggregat 18 gelangen. Über in der Zeichnung nicht dargestellte Auslassöffnungen des Oberteils 16 kann die angesaugte Saugluft vom Saugaggregat 18 an die Umgebung abgegeben werden.

Beim Durchströmen des Filterkörpers 48 wird von der Saugluft mitgeführtes Sauggut, also insbesondere Schmutz- und Staubpartikel, am Filterkörper 48 abgeschieden. Hierzu weist der Filterkörper 48 mehrere luftdurchlässige Filterabschnitte 71, 72, 73 und 74 auf, die in Umfangsrichtung der Filterpatrone 46 einander abwechselnd angeordnet sind und unmittelbar aneinander angrenzen. Bezogen auf die Strömungsrichtung der Saugluft sind die Filterabschnitte 71 bis 74 parallel zueinander angeordnet. Ein erster Filterabschnitt 71 ist ebenso wie ein dem ersten Filterabschnitt 71 diametral gegenüberliegender dritter Filterabschnitt 73 hydrophob ausgestaltet, und ein zweiter Filterabschnitt 72 ist ebenso wie ein diesem diametral gegenüberliegender vierter Filterabschnitt 74 hydrophil ausgebildet. Die ersten und dritten Filterabschnitte 71, 73 sind somit luftdurchlässig und wasserabweisend, wohingegen die zweiten und vierten Filterabschnitte 72, 74 luftdurchlässig und wasseranziehend sind.

Im dargestellten ersten Ausführungsbeispiel sind sämtliche Filterabschnitte 71, 72, 73 und 74 aus einem Filterpapier gefertigt, das im Fall der ersten und dritten Filterabschnitte 71 und 73 mit einer hydrophoben Substanz, und im Falle der zweiten und vierten Filterabschnitte 72, 74 mit einer hydrophilen Substanz imprägniert ist. Derartige hydrophobe und hydrophile Substanzen sind dem Fachmann bekannt. Die aneinander angrenzenden Filterabschnitte 71-74 sind jeweils miteinander verklebt. Mit ihrer dem topfförmigen Gehäuse 30 zugewandten Innenseite stützen sich die Filterabschnitte 71, 72, 73 und 74 an einem siebartigen Stützrohr 68 ab, das sich von der oberen Endscheibe 50 bis zur unteren Endscheibe 52 erstreckt und die Filterabschnitte 71, 72, 73 und 74 stabilisiert.

Die hydrophoben Filterabschnitte 71 und 73 erstrecken sich in Umfangsrichtung der Filterpatrone 46 jeweils über einen Winkelbereich von maximal 90°, und die jeweils zwischen den hydrophoben Fitterabschnitten 71 und 73 angeordneten hydrophilen Filterabschnitte 72 und 74 erstrecken sich in Umfangsrichtung der Filterpatrone 46 jeweils über einen Winkelbereich von mindestens 90°. In der dargestellten ersten Ausführungsform erstrecken sich sämtliche Filterabschnitte 71 bis 74 jeweils über einen Winkelbereich von 90°.

Während des Betriebes des Nass-/Trocken-Saugers 10 wird vom Saugaggregat 18 eine Saugströmung erzeugt, die ausgehend vom Saugeinlass 14 den Schmutzsammelbehälter 12 durchgreift, über die Filterpatrone 46 und die Durchtrittsöffnungen 36 in das Innere des topfförmigen Gehäuses 30, und von diesem über die ringförmige Einlassöffnung 26 zum Saugaggregat 18 gelangt, und vom Saugaggregat 18 über die in der Zeichnung nicht dargestellten Auslassöffnungen des Oberteils 16 an die Umgebung abgegeben wird. Unter der Wirkung der Saugströmung kann trockenes und feuchtes Sauggut, insbesondere auch Flüssigkeit, in den Schmutzsammelbehälter 12 eingesaugt werden. Wird Flüssigkeit angesaugt, so erhöht sich mit zunehmender Betriebsdauer der Flüssigkeitsspiegel innerhalb des Schmutzsammelbehälters 12, und erreicht schließlich die Filterpatrone 46, so dass die Filterabschnitte 71, 72, 73 und 74 mit Flüssigkeit benetzt werden. Die wasserabweisenden Filterabschnitte 71 und 73 weisen allenfalls eine sehr geringe Wasserdurchlässigkeit auf; sie sind jedoch auch im nassen Zustand für die angesaugte Saugluft durchlässig, d. h. die Luftdurchlässigkeit der hydrophoben Filterabschnitte 71 und 73 wird durch die Benetzung mit Flüssigkeit praktisch nicht beeinträchtigt. Somit kann auch im nassen Zustand der Filterpatrone 46 Saugluft angesaugt werden.

Die wasseranziehenden Filterabschnitte 72 und 74 weisen im benetzten Zustand zwar nur eine geringe Luftdurchlässigkeit auf; sie sind aber im Gegensatz zu den wasserabweisenden Filterabschnitten 71 und 73 für Flüssigkeit durchlässig, so dass der Schwimmerkörper 42 von der über die hydrophilen Filterabschnitte 72 und 74 und die Durchtrittsöffnungen 36 in das Innere des topfförmigen Gehäuses 30 eindringenden Flüssigkeit angehoben wird, und bei Erreichen eines maximal zulässigen Flüssigkeitsspiegels die Einlassöffnung 26 mit Ausnahme des nicht dargestellten Kühlluftkanals zuverlässig verschließen kann.

Beim Übergang von seiner Offenstellung in seine Schließstellung gleitet der Schwimmerkörper 42 am Führungsprofil 38 entlang. Da die auch im nassen Zustand luftdurchlässigen hydrophoben Filterabschnitte 71 und 73 einander diametral gegenüber liegen, wird der Schwimmerkörper 42 an einander gegenüberliegenden Seiten von Saugluft angeströmt. Es besteht daher keine Gefahr, dass der Schwimmerkörper 42 beim Übergang von seiner Offenstellung in seine Schließstellung verkantet oder von der Saugluft einseitig angehoben und unbeabsichtigt in seine Schließstellung bewegt wird.

Das Nass-/Trocken-Sauger-Filter 44 zeichnet sich aufgrund der Bereitstellung hydrophober 71, 73 und hydrophiler 72, 74 Filterabschnitte durch eine hohe Wasserdurchlässigkeit und eine hohe Luftdurchlässigkeit aus, wobei sämtliche Filterabschnitte 71-74 einen hohen Abscheidegrad für mitgeführtes Sauggut aufweisen. Somit kann mittels des Staubsaugers 10 sowohl trockenes Sauggut als auch feuchtes Sauggut und Flüssigkeit angesaugt werden, wobei bei nasser Filterpatrone 46 so lange ein Saugbetrieb aufrecht erhalten werden kann, bis die angesaugte Flüssigkeit einen durch die Schließstellung des Schwimmerkörpers 42 vorgegebenen maximalen Flüssigkeitsspiegel erreicht. Der Schwimmerkörper 42 bildet in Kombination mit der Einlassöffnung 26 ein Schwimmerventil aus, dessen Funktion durch das Staubsaugerfilter 44 nicht beeinträchtigt wird.

## Patentansprüche

1. Nass-/Trocken-Sauger-Filter (44) mit einem Filterelement, wobei das Filterelement an einer Filterhalterung eines Nass-/Trocken-Saugers (10) fixierbar ist und einen von der von einem Saugaggregat (18) des Nass-/Trocken-Saugers (10) angesaugten Saugluft durchströmbaren Filterkörper (48) aufweist zum Abscheiden von Sauggut; und wobei der Filterkörper (48) mindestens einen luftdurchlässigen hydrophoben Filterabschnitt (71, 73) und mindestens einen luftdurchlässigen hydrophilen Filterabschnitt (72, 74) aufweist, die in Strömungsrichtung der Saugluft parallel zueinander angeordnet sind; **dadurch gekennzeichnet, dass** das Filterelement in Form einer Filterpatrone (46) ausgestaltet ist mit einem zylindermantelförmigen Filterkörper (48), der zwischen einer oberen Endscheibe (50) und einer unteren Endscheibe (52) angeordnet ist, wobei die hydrophoben und hydrophilen Filterabschnitte (71, 73, 72, 74) in Umfangsrichtung der Filterpatrone (46) einander abwechselnd angeordnet sind und sich in axialer Richtung der Filterpatrone (46) zumindest über einen Teilbereich der Filterpatrone (46) erstrecken.

2. Nass-/Trocken-Sauger-Filter nach Anspruch 1, **dadurch gekennzeichnet, dass** sich der mindestens eine hydrophobe Filterabschnitt (71, 73) über maximal die Hälfte der gesamten Filterfläche des Filterkörpers (48) erstreckt.

3. Nass-/Trocken-Sauger-Filter nach Anspruch 1 oder 2, **dadurch gekennzeichnet, dass** die Filterfläche des mindestens einen hydrophoben Filterabschnitts (71, 73) gleich groß wie oder kleiner als die Filterfläche des mindestens einen hydrophilen Filterabschnitts (72, 74) ist.

4. Nass-/Trocken-Sauger-Filter nach einem der voranstehenden Ansprüche, **dadurch gekennzeichnet, dass** jeweils zwei hydrophile Filterabschnitte (72, 74) und zwei hydrophobe Filterabschnitte (71, 73) einander diametral gegenüberliegend angeordnet sind.

5. Nass-/Trocken-Sauger-Filter nach Anspruch 4, **dadurch gekennzeichnet, dass** sich die hydrophoben Filterabschnitte (71, 73) in Umfangsrichtung der Filterpatrone (46) jeweils über einen gleich großen wie oder kleineren Winkelbereich als die hydrophilen Filterabschnitte (72, 74) erstrecken.

6. Nass-/Trocken-Sauger-Filter nach einem der voranstehenden Ansprüche, **dadurch gekennzeichnet, dass** sich zwei einander diametral gegenüberliegende hydrophobe Filterabschnitte (71, 73) in Umfangsrichtung der Filterpatrone (46) über identische Winkelbereiche von jeweils maximal 90° erstrecken.

7. Nass-/Trocken-Sauger-Filter nach einem der voranstehenden Ansprüche, **dadurch gekennzeichnet, dass** der mindestens eine hydrophile Filterabschnitt (72, 74) ein imprägniertes Filterpapier aufweist.

8. Nass-/Trocken-Sauger-Filter nach einem der voranstehenden Ansprüche, **dadurch gekennzeichnet, dass** der mindestens eine hydrophobe Filterabschnitt (71, 73) ein imprägniertes Filterpapier oder eine Kunststoffmembran aufweist.

9. Nass-/Trocken-Sauger-Filter nach einem der voranstehenden Ansprüche, **dadurch gekennzeichnet, dass** der Filterkörper (48) ein Filtermaterial umfasst, das hydrophile und hydrophobe Flächenbereiche aufweist, wobei insbesondere das Filtermaterial bereichsweise mit unterschiedlichen Substanzen imprägniert ist.

10. Verwendung eines Nass-/Trocken-Sauger-Filters (44) nach einem der voranstehenden Ansprüche in Kombination mit einem Schwimmerventil bei einem Nass-/Trocken-Sauger (10), wobei das Schwimmerventil bezogen auf die vom Saugaggregat (18) des Nass-/Trocken-Saugers (10) erzeugte Saugströmung stromabwärts des Nass-/Trocken-Sauger-Filters (44) angeordnet wird.

## Claims

1. Wet/dry vacuum cleaner filter (44) with a filter element, the filter element being fixable on a filter holder of a wet/dry vacuum cleaner (10) and having a filter body (48) through which the suction air drawn in by a suction unit (18) of the wet/dry vacuum cleaner (10) can flow for separating suction material; and the filter body (48) comprising at least one air-permeable hydrophobic filter section (71, 73) and at least one air-permeable hydrophilic filter section (72, 74), which are arranged parallel to each other in the direction of flow of the suction air; **characterized in that** the filter element is configured in the form of a filter cartridge (46) with a cylinder shell-shaped filter body (48) which is arranged between an upper end disc (50) and a lower end disc (52), the hydrophobic and hydrophilic filter sections (71, 73, 72, 74) being arranged so as to alternate with each other in the circumferential direction of the filter cartridge (46) and extending in the axial direction of the filter cartridge (46) at least over a partial area of the filter cartridge (46).

2. Wet/dry vacuum cleaner filter in accordance with claim 1, **characterized in that** the at least one hydrophobic filter section (71, 73) extends over at most half of the entire filter surface of the filter body (48).

3. Wet/dry vacuum cleaner filter in accordance with claim 1 or 2, **characterized in that** the filter surface of the at least one hydrophobic filter section (71, 73) is the same size as or smaller than the filter surface of the at least one hydrophilic filter section (72, 74).

4. Wet/dry vacuum cleaner filter in accordance with any one of the preceding claims, **characterized in that** two hydrophilic filter sections (72, 74) and two hydrophobic filter sections (71, 73) in each case are arranged diametrically opposite each other.

5. Wet/dry vacuum cleaner filter in accordance with claim 4, **characterized in that** the hydrophobic filter sections (71, 73) extend in the circumferential direction of the filter cartridge (46) in each case over an angular range which is the same size as or smaller than that of the hydrophilic filter sections (72, 74).

6. Wet/dry vacuum cleaner filter in accordance with any one of the preceding claims, **characterized in that** two diametrically opposite hydrophobic filter sections (71, 73) extend in the circumferential direction of the filter cartridge (46) over identical angular ranges of at most 90° in each case.

7. Wet/dry vacuum cleaner filter in accordance with any one of the preceding claims, **characterized in that** the at least one hydrophilic filter section (72, 74) comprises an impregnated filter paper.

8. Wet/dry vacuum cleaner filter in accordance with any one of the preceding claims, **characterized in that** the at least one hydrophobic filter section (71, 73) comprises an impregnated filter paper or a plastic membrane.

9. Wet/dry vacuum cleaner filter in accordance with any one of the preceding claims, **characterized in that** the filter body (48) comprises a filter material having hydrophilic and hydrophobic surface areas, and, in particular, the filter material is impregnated in areas thereof with different substances.

10. Use of a wet/dry vacuum cleaner filter (44) in accordance with any one of the preceding claims in combination with a float valve in a wet/dry vacuum cleaner (10), the float valve being arranged downstream of the wet/dry vacuum cleaner filter (44) in relation to the suction flow generated by the suction unit (18) of the wet/dry vacuum cleaner (10).

## Revendications

1. Filtre d'aspirateur eau et poussières (44) comprenant un élément filtrant, l'élément filtrant pouvant être fixé sur un porte-filtre d'un aspirateur eau et poussières (10) et comprenant un corps de filtration (48) pouvant être traversé par l'air aspiré par une unité d'aspiration (18) de l'aspirateur eau et poussières (10), ledit corps permettant la séparation des matières aspirées; et le corps de filtration (48) comprenant au moins une section de filtration hydrophobe perméable à l'air (71, 73) et au moins une section de filtration hydrophile perméable à l'air (72, 74), qui sont disposées parallèlement l'une à l'autre dans le sens d'écoulement de l'air aspiré; **caractérisé en ce que** l'élément filtrant est configuré sous la forme d'une cartouche de filtration (46) pourvue d'un corps de filtration (48) cylindrique, qui est disposé entre un disque d'extrémité supérieur (50) et un disque d'extrémité inférieur (52), les sections de filtration hydrophobe et hydrophile (71, 73, 72, 74) étant disposées en alternance dans la direction circonférentielle de la cartouche de filtration (46) et s'étendant dans la direction axiale de la cartouche de filtration (46) au moins sur une zone partielle de la cartouche de filtration (46).

2. Filtre d'aspirateur eau et poussières selon la revendication 1, **caractérisé en ce que** ladite au moins une section de filtration hydrophobe (71, 73) s'étend au maximum sur la moitié de toute la surface de filtration du corps de filtration (48).

3. Filtre d'aspirateur eau et poussières selon la revendication 1 ou 2, **caractérisé en ce que** la surface de filtration de ladite au moins une section de filtration hydrophobe (71, 73) est aussi grande que la surface de filtration de ladite au moins une section de filtration hydrophile (72, 74) ou plus petite.

4. Filtre d'aspirateur eau et poussières selon l'une quelconque des revendications précédentes, **caractérisé en ce qu'**à chaque fois deux sections de filtration hydrophiles (72, 74) et deux sections de filtration hydrophobes (71, 73) sont diamétralement opposées les unes aux autres.

5. Filtre d'aspirateur eau et poussières selon la revendication 4, **caractérisé en ce que** les sections de filtration hydrophobes (71, 73) s'étendent dans la direction circonférentielle de la cartouche de filtration (46) respectivement sur une plage angulaire inférieure ou égale à celle des sections hydrophiles (72, 74).

6. Filtre d'aspirateur eau et poussières selon l'une quelconque des revendications précédentes, **caractérisé en ce que** deux sections de filtration hydrophobes (71, 73) mutuellement opposées s'étendent dans la direction circonférentielle de la cartouche de filtration (46) sur des plages angulaires identiques de respectivement 90° maximum.

7. Filtre d'aspirateur eau et poussières selon l'une quelconque des revendications précédentes, **caractérisé en ce que** ladite au moins une section de filtration hydrophile (72, 74) comporte un papier filtre imprégné.

8. Filtre d'aspirateur eau et poussières selon l'une quelconque des revendications précédentes, **caractérisé en ce que** ladite au moins une section de filtration hydrophobe (71, 73) comporte un papier filtre imprégné ou une membrane plastique.

9. Filtre d'aspirateur eau et poussières selon l'une quelconque des revendications précédentes, **caractérisé en ce que** le corps de filtration (48) comporte un matériau de filtration qui présente des zones de surface hydrophile et hydrophobe, le matériau de filtration étant notamment imprégné par endroits de différentes substances.

10. Utilisation d'un filtre d'aspirateur eau et poussières (44) selon l'une quelconque des revendications précédentes en combinaison avec une soupape à flotteur pour un aspirateur eau et poussières (10), la soupape à flotteur étant agencée en aval du filtre d'aspirateur eau et poussières (44) par rapport au flux d'aspiration produit par l'unité d'aspiration (18) de l'aspirateur eau et poussières (10).
